# EUROPÄISCHE PATENTSCHRIFT

(11) **EP 3 668 735 B1**
(45) Veröffentlichungstag und Bekanntmachung des Hinweises auf die Patenterteilung: **02.03.2022**
(21) Anmeldenummer: 18750372.7
(22) Anmeldetag: 27.07.2018
(51) Int. Cl.: B60J 10/90

(54) **VERDECKANORDNUNG FÜR EIN KRAFTFAHRZEUG**
COVERING ASSEMBLY FOR A MOTOR VEHICLE
ENSEMBLE CAPOTE POUR UN VÉHICULE AUTOMOBILE

(30) Priorität: 17.08.2017 DE 102017214376
(43) Veröffentlichungstag der Anmeldung: 24.06.2020
(73) Patentinhaber: Bayerische Motoren Werke Aktiengesellschaft, 80809 München (DE)
(72) Erfinder: GEISSLER, Andreas, 81371 Muenchen (DE)
(86) Internationale Anmeldenummer: PCT/EP2018/070456
(87) Internationale Veröffentlichungsnummer: WO 2019/034392

(56) Entgegenhaltungen:
- EP-A2- 1 695 855
- DE-A1-102009 040 609
- DE-C1- 4 120 474
- DE-C1- 4 136 895
- DE-T2- 69 701 655

## Beschreibung

Die vorliegende Erfindung betrifft eine Verdeckanordnung für ein Kraftfahrzeug.

Ein bekanntes Personenkraftfahrzeug der Cabriolet-Bauart weist ein Spannbügelverdeck auf, das zwischen einer offenen Stellung und einer geschlossenen Stellung überführbar ist. In der offenen Stellung ist das Spannbügelverdeck in einem zusammengefalteten Zustand in einem Verdeckkasten untergebracht. Der Verdeckkasten ist mit einer Verdeckkastenklappe verschließbar.

Die Dokumente EP1 695 855 A2, DE 10 2009 040609 A1 oder DE 697 01 655 T2 offenbaren eine Verdeckkastenklappe.

Die Verdeckkastenklappe besteht aus einem Rohbauteil und einer Blende, die in einem Innenraum des Personenkraftfahrzeugs eine sogenannte Hutablage ausbildet und an dem Rohbauteil montiert ist. Das Rohbauteil ist mehrschalig aufgebaut, d.h. mit einer Außenschale und einer Innenschale, und gibt der Verdeckkastenklappe die erforderliche Stabilität. Der außenseitige Übergangsbereich zwischen der Blende und dem Rohbauteil ist mit einer montieren Zierleiste abgedeckt. Beim Schließen des Verdecks wird die Verdeckkastenklappe aufgeschwenkt und das Verdeck ausgeklappt. Dann wird die Verdeckkastenklappe geschlossen und ein Spannbügel, der einen hinteren unteren Rand des Verdecks ausbildet, wird auf der Verdeckkastenklappe abgelegt. 'Die Zierleiste bildet eine Dichtfläche für eine Spannbügeldichtung aus, die an dem Spannbügel des Verdecks befestigt ist. Zugleich bildet die Zierleiste einen von außen sichtbaren optischen Übergang zwischen einem dann sichtbaren Teil der Verdeckkastenklappe und dem Verdeck aus. Der bei geschlossenem Verdeck von außen sichtbare Teil der Verdeckkastenklappe ist die Außenschale des Rohbauteils, die wiederum Teil einer Karosserieaußenhaut des Personenkraftfahrzeugs bildet.

Durch die Doppelfunktion der Zierleiste als Dichtfläche für die Spannbügeldichtung und als optischer Übergang zwischen dem Verdeck und der Karosserieaußenhaut ist es erforderlich, dass die Zierleiste hinreichend breit ausgeführt ist.

Es ist die Aufgabe der vorliegenden Erfindung, eine Verdeckanordnung zu schaffen, bei der eine Anordnung einer Spannbügeldichtung vereinfacht ist.

Diese Aufgabe wird durch eine Verdeckanordnung gelöst, die die Merkmale von Patentanspruch 1 aufweist. Bevorzugte Weiterbildungen der Erfindung sind in den abhängigen Patentansprüchen aufgeführt.

Eine erfindungsgemäße Verdeckanordnung für ein Kraftfahrzeug hat einen Verdeck und eine Verdeckkastenklappe zum Verschließen eines Verdeckkastens. Das Verdeck weist einen Spannbügel auf, der im geschlossenen Zustand des Verdecks in Richtung der Verdeckkastenklappe vorgespannt ist. Eine Spannbügeldichtung ist zur Dichtung eines Spaltes zwischen dem Verdeck und der Verdeckkastenklappe an dem Verdeck im Bereich des Spannbügels angeordnet. Eine Dichtfläche ist unmittelbar durch die Oberfläche der Verdeckkastenklappe ausgebildet.

Die Spannbügeldichtung liegt nicht auf einem getrennt ausgebildeten Montageelement, insbesondere einer Zierleiste auf. D.h., dass die Dichtfläche nicht durch ein zusätzliches Montageelement ausgebildet ist, sondern unmittelbar auf der Oberfläche der Verdeckkastenklappe ausgebildet ist.

Bevorzugt ist die Oberfläche der Verdeckkastenklappe unlackiert. Die Oberfläche kann ferner frei von jeglicher anderer Oberflächenbehandlung sein.

Hierdurch kann die Dichtfläche kostengünstig bzw. kostenneutral hergestellt werden, da sie integraler Bestandteil der ohnehin vorhandenen Oberfläche der Verdeckkastenklappe ist. Wie bereits vorstehend erwähnt ist, können zusätzliche Fertigungsschritte, wie ein Oberflächenbehandlungsprozess oder eine Montage eines Montageteils, entfallen.

Gemäß der Erfindung ist die Oberfläche der Verdeckkastenklappe eine Kunststoffoberfläche. Die Kunststoffoberfläche kann insbesondere aus Polyurethan ausgebildet sein.

Mit Oberfläche der Verdeckkastenklappe ist eine äußerste, integrale Schicht der Verdeckkastenklappe gemeint.

Erfindungsgemäß weist die Kunststoffoberfläche der Verdeckkastenklappe eine Narbung auf. Eine derartige Narbung ist von Oberflächen anderer Innenraumteile von Kraftfahrzeugen bekannt und gibt der Verdeckkastenklappe ein hochwertiges Aussehen. Die Narbung wird üblicherweise bei Herstellung der Kunstoffoberfläche durch eine entsprechend ausgebildete Werkzeugoberfläche ausgebildet.

Erfindungsgemäß weist die Narbung in dem Bereich der Dichtfläche eine geringere Tiefe auf, oder die Oberfläche ist derart ausgebildet, dass diese im Bereich der Dichtfläche ohne Narbung ausgebildet ist.

Vorteilhaft ist die Kunststoffoberfläche in einem Sprühhautverfahren oder einem Umromungsverfahren hergestellt.

Gemäß einer bevorzugten Weiterbildung der erfindungsgemäßen Verdeckanordnung weist die Verdeckkastenklappe einen Karosserieaussenhautabschnitt und einen Fahrzeuginnenraumabschnitt auf. Die Dichtfläche ist auf dem Fahrzeuginnenraumabschnitt ausgebildet.

Der Karosserieaußenhautabschnitt und der Fahrzeuginnenraumabschnitt können getrennt voneinander hergestellte Teile sein, die durch eine Montage miteinander verbunden sind. Der Fahrzeuginnenraumabschnitt, der auch Blende oder Innenraumblende genannt werden kann, kann ein Element sein, das an einen Grundkörper, insbesondere an ein Rohbauteil, der Verdeckkastenklappe montiert ist. Der Karosserieaußenhautabschnitt kann ein mehrschaliges Rohbauteil mit beispielsweise einer Außenschale und einer Innenschale sein. Das Rohbauteil kann derart ausgebildet sein, dass es der Verdeckkastenklappe eine erforderliche Stabilität verleiht. Das Rohbauteil kann aus einem metallischen Werkstoff, beispielsweise Stahl oder Aluminium, oder einem Kunststoff oder einem Faserverbundwerkstoff, beispielsweise einem faserverstärktem Kunststoff, oder in Mischbauweise ausgebildet sein.

Bevorzugt ist an dem Bereich, d.h. einem Übergangsbereich, zwischen dem Karosserieaußenhautabschnitt und dem Fahrzeuginnenraumabschnitt eine Zierleiste angeordnet. Vorteilhaft liegt die Spannbügeldichtung an der Oberfläche des Fahrzeuginnenraumabschnitts unmittelbar benachbart zu der Zierleiste an.

Die Zierleiste verdeckt vorteilhaft einen Übergang zwischen dem Karosserieaußenhautabschnitt und dem Fahrzeuginnenraumabschnitt der Verdeckkastenklappe. Ferner bildet sie einen optischen Übergang zwischen dem Verdeck und der Karosserie.

Bevorzugt verläuft die Spannbügeldichtung im Wesentlichen über eine gesamte Länge des Spannbügels.

Dies bedeutet, dass die Dichtung zwischen einem linken, unteren Ende angrenzend zu einem linken, hinteren Fahrzeugseitenfenster und einem rechten unteren Ende angrenzend zu einem rechten, hinteren Fahrzeugseitenfenster des Verdecks verlaufen kann.

Erfindungsgemäß ist die Dichtfläche bevorzugt durch eine nach oben gerichtete Oberfläche der Verdeckkastenklappe gebildet. Die Dichtfläche ist insbesondere eine äußere, also eine nach außen gerichtete Oberfläche der Verdeckkastenklappe. Die Dichtfläche ist beispielsweise eine nach außen gerichtete Fläche, die im Falle eines vollständig geöffneten Verdecks eine äußere Oberfläche des Kraftfahrzeugs bildet. Die nach oben gerichtete Oberfläche der Verdeckkastenklappe kann auch als Außenfläche der Verdeckkastenklappe bezeichnet werden.

Vorstehend genannte Weiterbildungen der Erfindung sind soweit sinnvoll und möglich beliebig miteinander kombinierbar.

Es folgt eine Kurzbeschreibung der Figuren.
Figur 1 ist eine schematische Schnittansicht etwa entlang einer Linie A-A durch eine Verdeckanordnung im Bereich eines Spannbügels eines Verdecks eines Kraftfahrzeugs gemäß einem Ausführungsbeispiel der vorliegenden Erfindung.
Figur 2 ist eine schematische Perspektivansicht eines Teils des Kraftfahrzeugs mit der Verdeckanordnung gemäß dem Ausführungsbeispiel der vorliegenden Erfindung.

Es folgt eine detaillierte Beschreibung eines Ausführungsbeispiels unter Bezugnahme auf die Figuren.

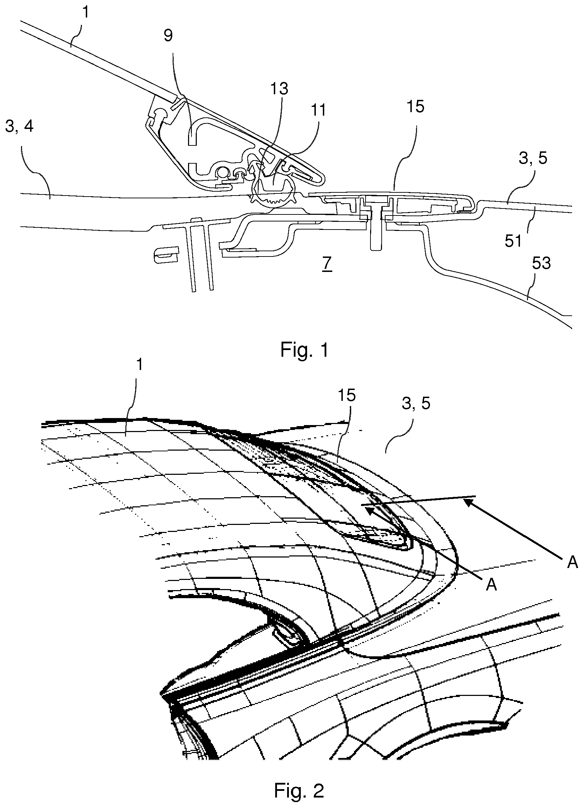

In Figur 1 ist ein in Fahrtrichtung hinterer Abschnitt einer Verdeckanordnung eines Cabriolet-Kraftfahrzeugs bzw. eines Cabriolet-Personenkraftfahrzeugs gezeigt. Das Kraftfahrzeug weist ein Verdeck 1 auf, das in einem zusammengeklappten und verstauten Zustand in einem Verdeckkasten 7 untergebracht werden kann. In Figur 1 ist der geschlossene Zustand des Verdecks 1 gezeigt, in dem sich das Verdeck 1 außerhalb des Verdeckkastens 7 befindet. Der Verdeckkasten 7 ist mit einer schwenkbaren Verdeckkastenklappe 3 verschlossen. Die Verdeckkastenklappe 3 besteht im Wesentlichen aus zwei Abschnitten - einem ersten Abschnitt, der sich im Wesentlichen unterhalb bzw. innerhalb des geschlossenen Verdecks 1 befindet und als Fahrzeuginnenraumabschnitt 4 bezeichnet ist, und einem zweiten Abschnitt, der sich im Wesentlichen außerhalb des geschlossenen Verdecks 1 befindet und als Karosserieaußenhautabschnitt 5 bezeichnet ist. Der Fahrzeuginnenraumabschnitt 4 könnte auch als Blende oder Hutablage bezeichnet werden und hat eine Kunststoffoberfläche aus einer Polyurethanhaut, die in einem Sprühhautverfahren oder alternativ in einem Umromungsverfahren hergestellt ist. Der Fahrzeuginnenraumabschnitt 4 ist mehrschichtig aufgebaut, wobei die Polyurethanhaut eine äußere Schicht bildet, die im Verbund mit den anderen Schichten ausgebildet ist. Die Polyurethanhaut weist eine Narbung auf, die ähnlich der Oberfläche eines Armaturenbretts oder der Oberfläche anderer Innenraumteile des Kraftfahrzeugs ausgebildet ist. Der Karosserieaußenhautabschnitt 5 ist ein Karosserierohbauteil bestehend aus zumindest einer Außenschale 51, die Bestandteil einer Karosserieaußenhaut ist, und einer Innenschale 53. Die Außenschale 51 und die Innenschale 53 sind miteinander verbunden und verleihen dem Karosserieaußenhautabschnitt 5 eine tragende Funktion und tragen wesentlich zur Stabilität bzw. Steifigkeit der Verdeckkastenklappe 3 bei.

Das Verdeck 1 weist einen Spannbügel 9 auf, der sich entlang einer hinteren unteren Kante des Verdecks 1 erstreckt. In dem gezeigten geschlossenen Zustand des Verdecks 1 ist der Spannbügel 9 durch eine Verdeckkinematik in Richtung des Verdeckkastendeckels 3 vorgespannt. An dem Spannbügel 9 ist eine Spannbügeldichtung 11 umlaufend befestigt, die einen Spalt zwischen dem Verdeck 1, d.h. dem Spannbügel 9, und dem Verdeckkastendeckel 3 derart abdichtet, dass kein Wasser, Staubpartikel oder dergleichen von außerhalb durch den genannten Spalt in den Fahrzeuginnenraum des Cabriolet-Kraftfahrzeugs eindringen kann. Die Spannbügeldichtung 11 ist wie an anderen Fahrzeugklappenelementen auf bekannte Weise mit einem Hohlprofil elastisch verformbar ausgebildet. In der Fig. 1 ist die Spannbügeldichtung 11 zur Vereinfachung in einer nicht zusammengedrückten Stellung gezeigt. Tatsächlich ist die Spannbügeldichtung 11 bei geschlossenem Verdeck 1 in Anlage zu dem Verdeckkastendeckel 3 und entsprechend komprimiert. Insbesondere liegt die Spannbügeldichtung 11 an einer Dichtfläche 13 an, die unmittelbar auf der Oberfläche der Polyurethanhaut des Fahrzeuginnenraumabschnitts 4 des Verdeckkastendeckels 3 ausgebildet. Genauer gesagt ist die Dichtfläche 13 durch die Oberfläche der Polyurethanhaut des Fahrzeuginnenraumabschnitts 4 ausgebildet. Angrenzend zu der Dichtfläche 13 ist eine von außerhalb sichtbare Zierleiste 15 ausgebildet, die einen Übergang zwischen dem Fahrzeuginnenraumabschnitt 4 und dem Karosserieaußenhautabschnitt 5 verdeckt. Der Karosserieaußenhautabschnitt 5, d.h. die Außenschale 51, ist ein lackiertes Blech oder Kunststoffteil, das optisch einen Bestandteil der Außenhaut der Karosserie des Cabriolet-Kraftfahrzeugs bildet. Der Karosserieaußenhautabschnitt ist üblicherweise in der Farbe der umgebenden Karosserie lackiert. Die Zierleiste kann ebenso in der Farbe der umgebenden Karosserie lackiert sein oder kann verchromt oder als Kontrast in einer anderen Farbe, beispielsweise schwarz, ausgeführt sein.

Die Spannbügeldichtung 11 liegt nicht auf einer Oberfläche der Zierleiste 15 auf, d.h. die Zierleiste 15 bildet gemäß dem Ausführungsbeispiel der Erfindung keine Dichtfläche für die Spannbügeldichtung 11 aus. Somit kann die Zierleiste 15 weniger breit ausgeführt werden, was zum Einen ästhetische Vorteile, insbesondere wenn das Verdeck 1 geöffnet ist, hat und zum Anderen Kostenvorteile mit sich bringt, da die Zierleiste aus einer geringeren Menge an Material hergestellt ist. Letzteres hat auch Gewichtsvorteile. Ferner kann auch eine entsprechende Oberflächenbehandlung der Zierleiste 15 entfallen, wenn diese nicht als Dichtfläche benötigt wird.

In Figur 2 ist eine schematische Perspektivansicht eines Teils des Kraftfahrzeugs mit dem Verdeck 1 gezeigt. Das Verdeck 1 ist geschlossen, so dass der darunter liegende Fahrzeuginnenraumabschnitt 4 des Verdeckkastendeckels 3 nicht zu sehen ist. Die Zierleiste 15 ist jedoch gezeigt, die an das untere Ende des Verdecks 1, d.h. den Bereich des Spannbügels 9, angrenzt. Ferner ist in Fig. 2 ungefähr eine Schnittlinie A-A der Schnittansicht von Fig. 1 dargestellt.

## Patentansprüche

1. Verdeckanordnung für ein Kraftfahrzeug mit einem Verdeck (1) und einer Verdeckkastenklappe (3, 4, 5) zum Verschließen eines Verdeckkastens (7), wobei das Verdeck (1) einen Spannbügel (9) aufweist, der im geschlossenen Zustand des Verdecks (1) in Richtung der Verdeckkastenklappe (3, 4, 5) vorgespannt ist, wobei eine Spannbügeldichtung (11) zur Dichtung eines Spaltes zwischen dem Verdeck (1) und der Verdeckkastenklappe (3, 4, 5) an dem Verdeck (1) im Bereich des Spannbügels (9) angeordnet ist, und wobei eine Dichtfläche (13) unmittelbar durch die Oberfläche der Verdeckkastenklappe (3, 4, 5) ausgebildet ist, wobei die Oberfläche der Verdeckkastenklappe (3, 4, 5) eine Kunststoffoberfläche ist, **dadurch gekennzeichnet, dass**
die Kunststoffoberfläche eine Narbung aufweist und wobei die Narbung in dem Bereich der Dichtfläche eine geringere Tiefe aufweist oder der Bereich der Dichtfläche ohne Narbung ausgebildet ist.

2. Verdeckanordnung nach Patentanspruch 1, wobei die Oberfläche der Verdeckkastenklappe (3, 4, 5) unlackiert und/oder nicht oberflächenbehandelt ist.

3. Verdeckanordnung nach Patentanspruch 1 oder 2, wobei die Oberfläche der Verdeckkastenklappe (3, 4, 5) eine Kunststoffoberfläche aus Polyurethan ist.

4. Verdeckanordnung nach einem der Patentansprüche 1 bis 3, wobei die Kunststoffoberfläche in einem Sprühhautverfahren oder einem Umromungsverfahren hergestellt ist.

5. Verdeckanordnung nach einem der Patentansprüche 1 bis 4, wobei die Verdeckkastenklappe (3, 4, 5) einen Karosserieaussenhautabschnitt (5) und einen Fahrzeuginnenraumabschnitt (4) aufweist und die Dichtfläche (13) an dem Fahrzeuginnenraumabschnitt (4) ausgebildet ist.

6. Verdeckanordnung nach einem der Patentansprüche 1 bis 5, wobei an dem Bereich zwischen dem Karosserieaußenhautabschnitt (4) und dem Fahrzeuginnenraumabschnitt (5) eine Zierleiste (13) angeordnet ist und die Spannbügeldichtung (11) an der Oberfläche des Fahrzeuginnenraumabschnitts (5) unmittelbar benachbart zu der Zierleiste (13) anliegt.

7. Verdeckanordnung nach einem der Patentansprüche 1 bis 6, wobei die Spannbügeldichtung (11) im Wesentlichen über eine gesamte Länge des Spannbügels (9) verläuft.

8. Verdeckanordnung nach einem der Patentansprüche 1 bis 7, wobei die Dichtfläche durch eine nach oben gerichtete Oberfläche der Verdeckkastenklappe gebildet ist.

## Claims

1. Covering assembly for a motor vehicle having a cover (1) and a cover compartment lid (3, 4, 5) for closing a cover compartment (7), wherein the cover (1) has a tensioning hoop (9) which is pretensioned in the direction of the cover compartment lid (3, 4, 5) in the closed state of the cover (1), wherein a tensioning hoop seal (11) is arranged on the cover (1) in the region of the tensioning hoop (9) in order to seal a gap between the cover (1) and the cover compartment lid (3, 4, 5), and wherein a sealing surface (13) is formed directly by the surface of the cover compartment lid (3, 4, 5), wherein the surface of the cover compartment lid (3, 4, 5) is a plastic surface,
**characterized in that**
the plastic surface has a surface texture and wherein the surface texture in the region of the sealing surface has a smaller depth, or the region of the sealing surface is formed without surface texture.

2. Covering assembly according to Patent Claim 1, wherein the surface of the cover compartment lid (3, 4, 5) is unpainted and/or non-surface-treated.

3. Covering assembly according to Patent Claim 1 or 2, wherein the surface of the cover compartment lid (3, 4, 5) is a plastic surface consisting of polyurethane.

4. Covering assembly according to one of Patent Claims 1 to 3, wherein the plastic surface is produced in a spray skin method or a forming method.

5. Covering assembly according to one of Patent Claims 1 to 4, wherein the cover compartment lid (3, 4, 5) has a body outer skin portion (5) and a vehicle interior portion (4), and the sealing surface (13) is formed on the vehicle interior portion (4).

6. Covering assembly according to one of Patent Claims 1 to 5, wherein a decorative strip (13) is arranged at the region between the body outer skin portion (4) and the vehicle interior portion (5), and the tensioning hoop seal (11) bears against the surface of the vehicle interior portion (5) directly adjacent to the decorative strip (13).

7. Covering assembly according to one of Patent Claims 1 to 6, wherein the tensioning hoop seal (11) extends substantially over an entire length of the tensioning hoop (9).

8. Covering assembly according to one of Patent Claims 1 to 7, wherein the sealing surface is formed by an upwardly directed surface of the cover compartment lid.

## Revendications

1. Ensemble capote pour un véhicule automobile, comprenant une capote (1) et un volet de coffre de capote (3, 4, 5) pour la fermeture d'un coffre de capote (7), la capote (1) présentant un arceau de tension (9) qui, à l'état fermé de la capote (1), est précontraint en direction du volet de coffre de capote (3, 4, 5), un joint d'étanchéité d'arceau de tension (11) pour l'étanchéification d'un espace entre la capote (1) et le volet de coffre de capote (3, 4, 5), 5) étant agencé sur la capote (1) dans la zone de l'arceau de tension (9), et une surface d'étanchéité (13) étant formée directement par la surface du volet de coffre de capote (3, 4, 5), la surface du volet de coffre de capote (3, 4, 5) étant une surface en matière plastique, **caractérisé en ce que**
la surface en matière plastique présente un grain et dans lequel le grain présente une profondeur plus faible dans la zone de la surface d'étanchéité ou la zone de la surface d'étanchéité est configurée sans grain.

2. Ensemble capote selon la revendication 1, dans lequel la surface du volet de coffre de capote (3, 4, 5) n'est pas vernie et/ou n'est pas traitée en surface.

3. Ensemble capote selon la revendication 1 ou 2, dans lequel la surface du volet de coffre de capote (3, 4, 5) est une surface en matière plastique en polyuréthane.

4. Ensemble capote selon l'une quelconque des revendications 1 à 3, dans lequel la surface en matière plastique est fabriquée par un procédé de pulvérisation de membrane ou un procédé de formage.

5. Ensemble capote selon l'une quelconque des revendications 1 à 4, dans lequel le volet de coffre de capote (3, 4, 5) présente une section de membrane extérieure de carrosserie (5) et une section d'espace intérieur de véhicule (4), et la surface d'étanchéité (13) est formée sur la section d'espace intérieur de véhicule (4).

6. Ensemble capote selon l'une quelconque des revendications 1 à 5, dans lequel une baguette décorative (13) est agencée sur la zone entre la section de membrane extérieure de la carrosserie (4) et la section d'espace intérieur de véhicule (5), et le joint d'étanchéité d'arceau de tension (11) s'applique contre la surface de la section d'espace intérieur de véhicule (5), directement à côté de la baguette décorative (13).

7. Ensemble capote selon l'une quelconque des revendications 1 à 6, dans lequel le joint d'étanchéité d'arceau de tension (11) s'étend essentiellement sur toute la longueur de l'arceau de tension (9).

8. Ensemble capote selon l'une quelconque des revendications 1 à 7, dans lequel la surface d'étanchéité est formée par une surface du volet de coffre de capote orientée vers le haut.
